# EUROPEAN PATENT APPLICATION

(11) **EP 2 680 216 A1**
(43) Date of publication of application: **01.01.2014**
(21) Application number: 13174027.6
(22) Date of filing: 27.06.2013
(51) Int. Cl.: G06Q 50/00, G06Q 40/02, G06Q 30/02, G06Q 20/00

(54) **Product purchase platform using mobile terminal in product exchange**

(30) Priority: 28.06.2012 TW 101212518
(71) Applicant: Thank you my friends Corporation, 106 Taipei City (TW)
(72) Inventor: Lin, Chung-Yu, 106 Taipei City (TW); Huang, Yu-Hung, 106 Taipei City (TW)
(74) Representative: Hintermeyer, Julia

(57) **Abstract**

A product purchase platform using a mobile terminal in product exchange is revealed. The product purchase platform includes a first terminal and a second terminal is revealed. The first user is connected to a product platform set up in a server through the first terminal for purchasing at least one product and transmitting a piece of purchase information and a second user' information. A second user uses the second terminal to receive a product voucher transmitted by the server and carry the second terminal to a store for exchange of the product. The second user uses the second terminal to connect to the server for confirming validity of the product voucher. After confirming that the product voucher is valid, the store gives the product to the second user according to the purchase information.

## Description

### BACKGROUND OF THE INVENTION

### 1. Fields of the invention

The present invention relates to a product purchase platform, especially to a product purchase platform using a mobile terminal in product exchange that allows users to verify a product voucher by a mobile terminal and then redeem the product voucher in exchange for products on physical stores.

### 2. Descriptions of Related Art

Gift-giving behavior is for expressions of gratitude, caring, apology, celebration, sympathy or caring in our society. Sending a gift is an important relationship building gesture. Due to globalization, the social network allows users to meet people all over the world. However, when people want to send gifts to their friends who stay far away, they need to consider the appropriate types of gifts, care packages, and the delivery way. Once the gifts are damaged or broken during the shipment, the gift giver and the gift recipient will not be satisfied with the gift-giving experience.

Thus there is a need to have a product purchase platform using a mobile terminal in product exchange in which recipients can get the product the gift giver purchased in stores nearby. This ensures the gift in a better condition. Moreover, the cost of shipment is included in the purchasing cost of the store so that the shipping fee is saved. Compared with the way available now that people send the gifts at convenient stores, the warehousing cost of the gift is also included in the original warehousing cost of goods the store needs to pay and there is no need to pay additional warehousing cost. The present invention provides a more economical product purchase and voucher redemption model.

Thus the present invention provides a product purchase platform using a mobile terminal in product exchange. The product purchase platform consists of a first terminal and a second terminal. The first terminal is connected to a server for transmitting a piece of purchase information and a second user's information to the server. The second terminal is a mobile terminal also connected to the server for receiving a product voucher transmitted by the server and for confirming validity of the product voucher. A first user is connected to the server via the first terminal for purchasing at least one product on a product platform built in the server and sending the product to a second user as a gift. The second user uses the second terminal to get the product voucher that is transmitted by the server and carries the second terminal to redeem the product voucher for the product in a store. Before redemption of the product voucher, the second user uses the second terminal to connect to the server for confirming that the product voucher is still valid. After the validity of the product voucher being confirmed by the server, the store gives the product to the second user according to the purchase information. Thus the online purchase and the redemption of the product voucher for the product are completed.

### SUMMARY OF THE INVENTION

Therefore it is a primary object of the present invention to provide a product purchase platform using a mobile terminal in product exchange that allows a first user to be connected to a server for purchasing at least one product online and sending the product to a second user as a gift.

It is another object of the present invention to provide a product purchase platform using a mobile terminal in product exchange in which the server transmits a product voucher to the second user so that the second user can redeems the product voucher for the product in a store.

It is a further object of the present invention to provide a product purchase platform using a mobile terminal in product exchange in which the second user carries the second terminal to be connected to the server for verifying whether the product voucher is still valid.

It is a further object of the present invention to provide a product purchase platform using a mobile terminal in product exchange that provides the second user a first cash gift voucher or a second cash gift voucher. Thus the second user is attracted to redeem the first cash gift voucher or the second cash gift voucher for a cash gift to be used in product purchase services provided by the server for saving money.

It is a further object of the present invention to provide a product purchase platform using a mobile terminal in product exchange in which a third party organization receives a purchase price and transmits a piece of already-paid information to the server so that the server transmits the product voucher to the second user after confirming the payment of the purchase price.

It is a further object of the present invention to provide a product purchase platform using a mobile terminal in product exchange in which the server produces a piece of already-redeemed information after the product voucher being verified so as to avoid double use of the product voucher.

In order to achieve the above objects, a product purchase platform using a mobile terminal in product exchange according to the present invention includes a first terminal and a second terminal. The first terminal is used by a first user to be connected to a server for transmitting a piece of purchase information and a piece of a second user's information to the server. The second terminal is a mobile terminal operated by a second user and connected to the server for receiving a product voucher transmitted by the server and for checking whether the product voucher is valid. After confirming validity of the product voucher, a store gives at least one product to the second user according to the purchase information.

By the above components, the first user is connected to the server provided by a service supplier for purchasing at least one product online on a product platform built in the server, and transmitting the purchase information and the second user's information to the server. The purchase information includes at least one product name and at least one product while the second user's information includes an electronic mail (email) account/address or a mobile phone number. After confirming a payment made by the first user, the server transmits the product voucher to the second terminal through an email or a mobile phone short message. Thus the second user obtains the product voucher. The product voucher includes at least one one-dimensional (1D) barcode, at least one 2D barcode or at least one serial number. The second user carries the second terminal to the store that cooperates with the service supplier. Before the redemption of the product voucher, the second terminal is used to connect to the server for checking whether the product voucher is still valid and there are three checking mechanisms available now. The first is that the second terminal directly transmits the product voucher to the server and the server immediately returns a verification result of the product voucher and the purchase information after analyzing and verifying the product voucher. The second mechanism is that the second terminal transmits the product voucher to the server after the product voucher being analyzed to get the purchase information. Then the server verifies the product voucher and returns the verification result of the product voucher. The third mechanism is that a voucher code and the purchase information are obtained after analysis of the product voucher. Next the second terminal transmits the voucher code to the server and the server returns the verification result of the product voucher after verifying the voucher code. All the three mechanisms enable the store to learn whether the product voucher is still valid and the name as well as quantity of at least one product for which the product voucher is redeemed. The verification result of the product voucher and the purchase information transmitted by the server are contained in at least one 1D barcode, at least one 2D barcode or at least one serial number. Thus the store can use an input device to get the verification result of the product voucher and the purchase information. Moreover, the server automatically generates and saves a piece of already-redeemed information after transmitting the product voucher so as to prevent the product voucher from being redeemed again.

Furthermore, a first cash gift voucher is transmitted to the second terminal via the server or a second cash gift voucher is given to the second user by the store. Like the product voucher, the first cash gift voucher or the second cash gift voucher includes at least one 1D barcode, at least one 2D barcode or at least one serial number. The second user is connected to the server via the second terminal or a third terminal for transmitting the first cash gift voucher or the second cash gift voucher to the sever to be verified. Then the server returns a verification result of the first cash gift voucher together with a piece of first cash gift information, or a verification results of the second cash gift voucher together with a piece of second cash gift information. The first cash gift information and the second cash gift information respectively includes the amount and expiration date of the first cash gift and those of the second cash gift. Thereby the service supplier gives the second user virtual cash gift that can be used on the product platform. Thus the second user is attracted to purchase products on the product platform and send them to others as gifts.

In addition, a product purchase platform using a mobile terminal in product exchange of the present invention further includes a fourth terminal. The fourth terminal is operated by a third party organization to be connected to the server for receiving a piece of purchase price information and transmitting a piece of already-paid information to the server after the third party organization confirming the payment of the purchase price. The third party organization cooperates with the service supplier. After receiving the purchase information transmitted from the first user, the server transmits a piece of purchase price information to the fourth terminal of the third party organization. The third party organization returns a piece of already-paid information to the server after receiving a purchase price that is consistent with the purchase price information. Thus the server transmits a product voucher to the second terminal and informs the second user to redeem the product voucher for the product in a store cooperating with the service supplier. The purchase price information includes a payment way. The payment way means how the first user pay the purchase price to the third party organization, including bank counter remittance, ATM remittance, using credit card at the counter, using credit card online, installment payment at the counter, and installment payment online.

While using the product purchase platform using a mobile terminal in product exchange, the first user is directly connected to the product platform of the server, or is connected to the server via a social networking site. The service supplier cooperates with a social networking site company for connecting and sharing accounts/identities and application services. Thus consumers can more easily get access to promotion information and more possibly purchase and exchange product on the product platform. The first user can also purchase the product on the product platform and redeem the product voucher for the product for himself. Under such condition, the first terminal and the second terminal can be the same terminal.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a schematic drawing showing component relationships of an embodiment according to the present invention;
Fig. 2A is a flow chart showing steps of product purchase and payment flow of an embodiment according to the present invention;
Fig. 2B is a flow chart showing how to use product vouchers in exchange for products according to the present invention;
Fig. 2C is a flow chart showing how to redeem cash gift vouchers in exchange for cash gifts of an embodiment according to the present invention.

### DETAILED DESCRIPTION OF THE PREFERRED EMBODIMENT

A product purchase platform using a mobile terminal in product exchange features on that a first user uses a first terminal to connect to a server provided by a service supplier for purchasing at least one product online and sending the product to a second user as a gift. The second user uses a second terminal to receive a product voucher transmitted by the server and then carries the second terminal to a store to redeem the product voucher for the product. Before redemption, the second user is connected to the server via the second terminal for checking whether the product voucher is still valid. After the store confirming that the product voucher is valid, the product is given to the second user. After transmitting a verification result of the product voucher to the second terminal, the server automatically generates and saves a piece of already-redeemed information so as to avoid double use of the product voucher. Moreover, the server can also provide the second user a first cash gift voucher or a second cash gift voucher that is redeemable to exchange for virtual cash gift. Thus the second user is attracted to purchase and exchange products on the product platform of the server. A third party organization receives a piece of purchase price information transmitted by the server via a fourth terminal and returns a piece of already-paid information to the server after receiving a purchase price. Then the server transmits the product voucher to the second terminal.

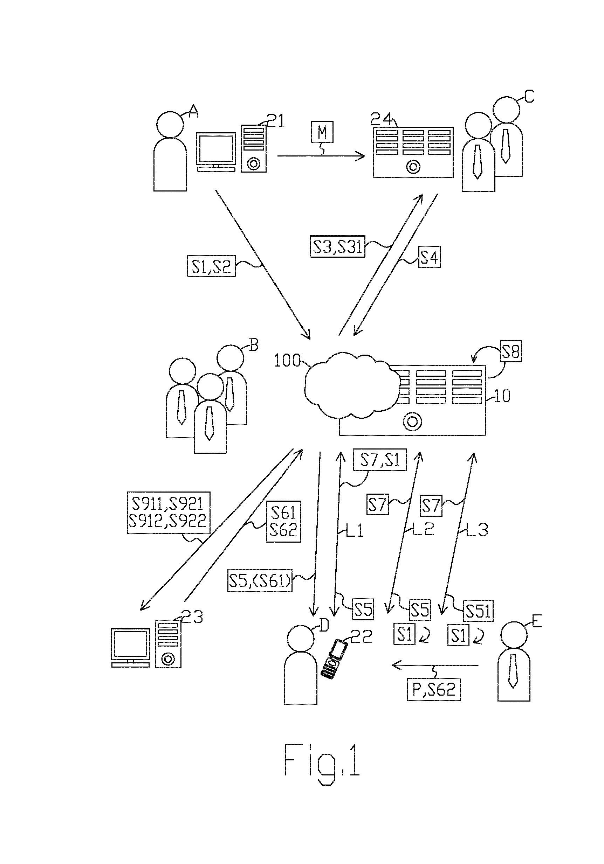

Refer to Fig. 1, a product purchase platform using a mobile terminal in product exchange of the present invention includes a server 10, a first terminal 21, a second terminal 22, a third terminal 23, and a fourth terminal 24. A service supplier B provides the server 10 and sets up a product platform 100 in the server 10. A first user A is connected to the server 10 by the first terminal 21 for purchasing a product P on the product platform 100 and transmitting a piece of purchase information S1 as well as a second user's information S2 to the server 10. The purchase information S1 includes a product name and a product quantity of the product P. The server 10 sends a piece of purchase price information S3 to a fourth terminal 24 operated by a third party organization C. The purchase price information S3 includes a payment way S31 mentioned that the first user A makes a payment of a purchase price M to the third party organization C by bank counter remittance. After receiving of the purchase price M, the third party organization C sends a piece of already-paid information S4 to the server 10. Then the server 10 transmits a product voucher S5 to a second terminal 22 owned by a second user D after confirming the payment of the purchase price M.

When the second user D goes to a store E for getting the product P, the second terminal 22 is connected to the server 10 and there are three kinds of mechanisms to verify the product voucher S5 and get the purchase information S1. As the L1 pathway shown in the figure, the first mechanism is that the second terminal 22 directly transmits the product voucher S5 to the server 10 and then receives a verification result of the product voucher S7 and the purchase information S1 the server 10 returns. The second mechanism (L2 pathway shown in the figure), the product voucher S5 is analyzed by the store E to get the purchase information S1 while the second terminal 22 transmits the product voucher S5 to the server 10 and then receives a verification result of the product voucher S7 the server returns 10. The third mechanism (L3 pathway shown in the figure), the product voucher S5 is analyzed by the store E to get a voucher code S51 and the purchase information S1 while the second terminal 22 transmits the voucher code S51 to the server 10 and then receives a verification result of the product voucher S7 the server returns 10. The server 10 immediately generates and saves a piece of already-redeemed information S8 after transmitting the verification result of the product voucher S7. The store E confirms that the product voucher S5 is still valid according to the verification result of the product voucher S7 and learns the product P the product voucher S5 for according to the purchase information S1. Next the product P and a second cash gift voucher S62 are given to the second user D. Moreover, the server 10 can also transmit a first cash gift voucher S61 to the second terminal 22 while transmitting the product voucher S5 or the verification result of the product voucher S7. Furthermore, the second user D is connected to the server 10 via the third terminal 23 for transmitting the first cash gift voucher S61 and the second cash gift voucher S62 to the server 10 and receiving a verification result of the first cash gift voucher S911, a first cash gift information S921, a verification result of the second cash gift voucher S912, and a second cash gift information S922. The first cash gift information S921 includes the amount and expiration date of the first cash gift. The second cash gift information S922 includes the amount and expiration date of the second cash gift. Both are virtual cash gifts the second user D can be used on the product platform 100.

In this embodiment, the second terminal 22 is a mobile terminal so that the second user D can carry it conveniently to the store E. The second user's information S2 includes a mobile phone number or an e-mail address. The server 10 can transmit an e-mail having the product voucher S5 or a mobile phone short message with the product voucher S5. The product voucher S5 contains at least one one-dimensional (1D) barcode, at least one 2D barcode, or at least one serial number. The second user D can print the product voucher S5 on a sheet of paper or directly show the product voucher S5 on the second terminal 22. The store E reads and analyzes the product voucher S5 by an input device (not shown in figure). For example, the input device is a barcode scanner when the product voucher S5 is a barcode. The input device is a keyboard when the product voucher S5 is a serial number. Similarly, the first cash gift voucher S61 and the second cash gift voucher S62 respectively contain at least one 1D barcode, at least one 2D barcode or at least one serial number. In the store E, the second cash gift voucher S62 is printed on a piece of paper and given to the second user D. Thus the second user D can input the first cash gift voucher S61 and the second cash gift voucher S62 into the third terminal 23 through an input device (not shown in figure), or directly use the third terminal 23 to receive the first cash gift voucher S61 and the second cash gift voucher S62 transmitted by the second terminal 22. Moreover, the payment way S31 can be bank counter remittance, ATM remittance, using credit card at the counter, using credit card online, installment payment at the counter, installment payment online, etc.

According to the arrangement of the components in this embodiment, a first user is connected to a server provided by a service supplier so as to purchase at least one product on a product platform in the server and give the product to a second user as a gift. A third party organization assists the service supplier to receive a purchase price corresponding to the product. The second user can redeem a product voucher the server transmitted in exchange for the product. Moreover, the second user uses a second terminal to connect to the server for verification of validity of the product voucher and redeeming a first cash gift voucher or a second cash gift voucher provided by the server for a virtual cash gift. Thereby the second user is attracted by the virtual cash gift the service supplier provided to purchase and exchange products on the product platform.

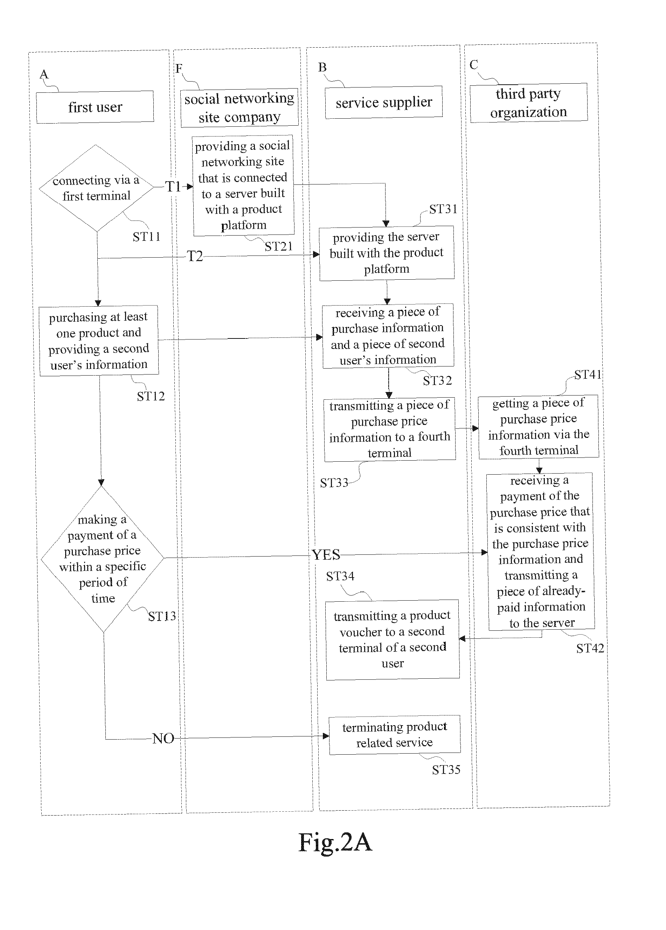

Refer to Fig. 2A, a flow chart showing steps of product purchase and payment of the above embodiment. As shown in the figure, a product purchase and payment flow of the present invention includes following steps:
- Step ST11:: connecting via a first terminal;
- Step ST12:: purchasing at least one product and providing a second user's information;
- Step ST13:: making a payment of a purchase price within a specific period of time;
- Step ST21:: providing a social networking site that is connected to a server built with a product platform;
- Step ST31:: providing the server built with the product platform;
- Step ST32:: receiving a piece of purchase information and a piece of second user's information;
- Step ST33:: transmitting a piece of purchase price information to a fourth terminal;
- Step ST34:: transmitting a product voucher to a second terminal of a second user
- Step ST35:: terminating product related service;
- Step ST41:: getting a piece of purchase price information via the fourth terminal; and
- Step ST42:: receiving a payment of the purchase price that is consistent with the purchase price information and transmitting a piece of already-paid information to the server.

The steps ST11 to ST13 are executed by a first user A. The step ST21 is run by a social networking site company F. The steps ST31 to ST35 are executed by a service supplier B of the product platform. The step ST41 and the step ST42 are run by a third party organization C.

In the step ST11, the first user A uses a first terminal to be connected to the social networking site T1 or to the product platform T2. Once the social networking site T1 is connected, take the step ST21. The first user A browses and logs into a social networking site provided by the social networking site company F, further connects to the server of the product platform through the social networking site and take the step ST31. If the first user A selects the T2, run the step ST31 directly, the first terminal is connected to the server. Next take the step ST12. The first user A purchases at least one product and provides a piece of second user's information on the product platform. Now use a first user's account or an identity on the social networking site to log into the product platform. After confirming the purchase, run the step ST32. The server receives a piece of purchase information and the second user's information. Then the server executes the step ST33 and the step ST41 automatically. A piece of purchase information is transmitted from the server to a fourth terminal of the third party organization C. Take the step ST13 after the step ST33 and the step ST41. Once the first user A makes a payment to the third party organization C within a specified time limit the service supplier B set, run the step ST42. The third party organization C receives the purchase price and transmits a piece of already-paid information to the server so that the server runs the step ST34. A product voucher is transmitted to a second terminal of a second user so that the second user can redeem the product voucher for the product (the details are in the following). If the first user A doesn't make a payment to the third party organization C within the specified time limit the service supplier B set, take the step ST35. The server supplier B terminates product-related service this time.

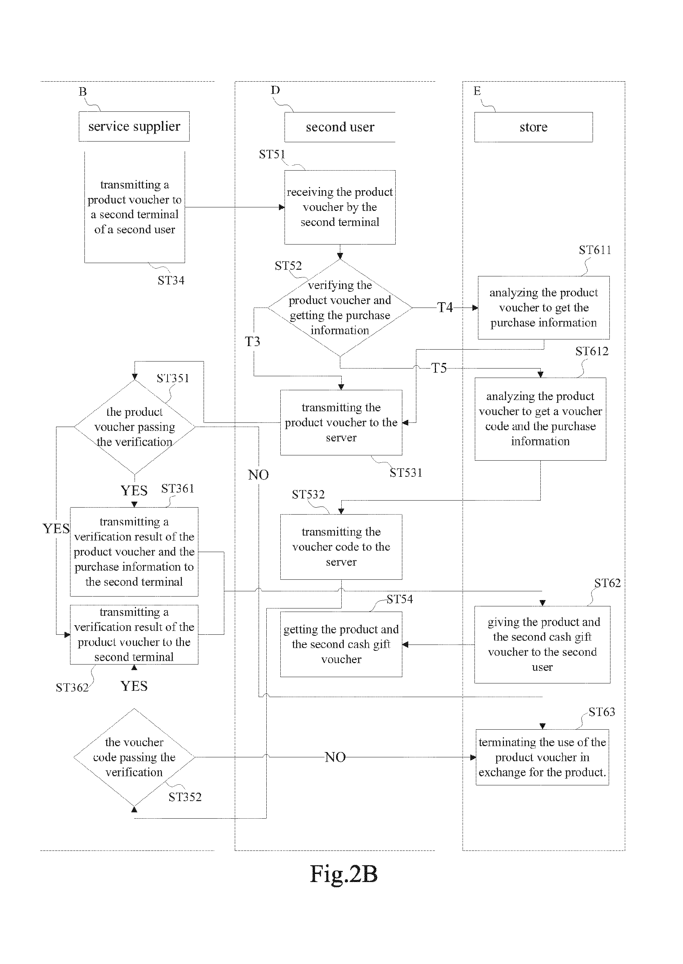

Refer to Fig. 2B, a flow chart showing steps of product exchange of an embodiment according to the present invention is revealed. The product exchange flow includes following steps.
- Step ST34:: transmitting a product voucher to a second terminal of a second user;
- Step ST351:: the product voucher passing the verification;
- Step ST352:: the voucher code passing the verification;
- Step ST361:: transmitting a verification result of the product voucher and the purchase information to the second terminal;
- Step ST362:: transmitting a verification result of the product voucher to the second terminal;
- Step ST51:: receiving the product voucher by the second terminal;
- Step ST52:: verifying the product voucher and getting the purchase information;
- Step ST531:: transmitting the product voucher to the server;
- Step ST532:: transmitting the voucher code to the server;
- Step ST54:: getting the product and the second cash gift voucher;
- Step ST611:: analyzing the product voucher to get the purchase information;
- Step ST612:: analyzing the product voucher to get a voucher code and the purchase information;
- Step ST62:: giving the product and the second cash gift voucher to the second user; and
- Step ST63:: terminating the use of the product voucher in exchange for the product.

The steps ST3 ∼ 362 are executed by the service supplier B. A second user D runs the steps ST51 ∼ 54, and a store E takes the steps ST61 - 63.

In the step ST34, the service supplier B transmits a product voucher to a second terminal of the second user D by a server. Then refer to the step ST51, the second user D gets the product voucher. Then the second user D takes the step ST52, verify the product voucher and get the purchase information. After the step ST52, there are three pathways for different mechanisms. Select T3 and take the step ST531. The second terminal directly transmits the product voucher to the server so that the server runs the step ST351. Once the product voucher passes the verification, take the step ST361. The server transmits a verification result of the product voucher and the purchase information to the second terminal so that the store E runs the step ST62. Give the product voucher and the second cash gift voucher to the second user D. If the product voucher doesn't pass the verification, take the step ST63, stop redemption of the product voucher in exchange for the product. If T4 is selected, take the step ST611. The store E analyzes the product voucher to get the purchase information. Then take the step ST531. The second terminal transmits the product voucher to the server and the server runs the step ST351. Once the product voucher passes the verification, take the step ST362. The server transmits a verification result of the product voucher to the second terminal and the store E runs the step ST62. The product and the second cash gift voucher are given to the second user D. If the product voucher doesn't pass the verification, take the step ST63, stop the use of the product voucher in exchange for the product. If T5 is selected, take the step ST612. The store E analyzes the product voucher to get a voucher code and the purchase information and run the step ST532. The second terminal transmits the voucher code to the server and the server takes the step ST352. If the voucher code passes the verification, run the step ST362. The server transmits a verification result of the product voucher to the second terminal and the store E runs the step ST62. The product and the second cash gift voucher are given to the second user D. If the voucher code doesn't pass the verification, take the step ST63. Stop the redemption of the product voucher in exchange for the product. Moreover, after transmitting the verification result of the product voucher to the second terminal, the server immediately generates and saves a piece of already-redeemed information (not shown in the figure). In the steps ST34, ST351, and ST352, the server can also transmit a first cash gift voucher to the second terminal at the same time.

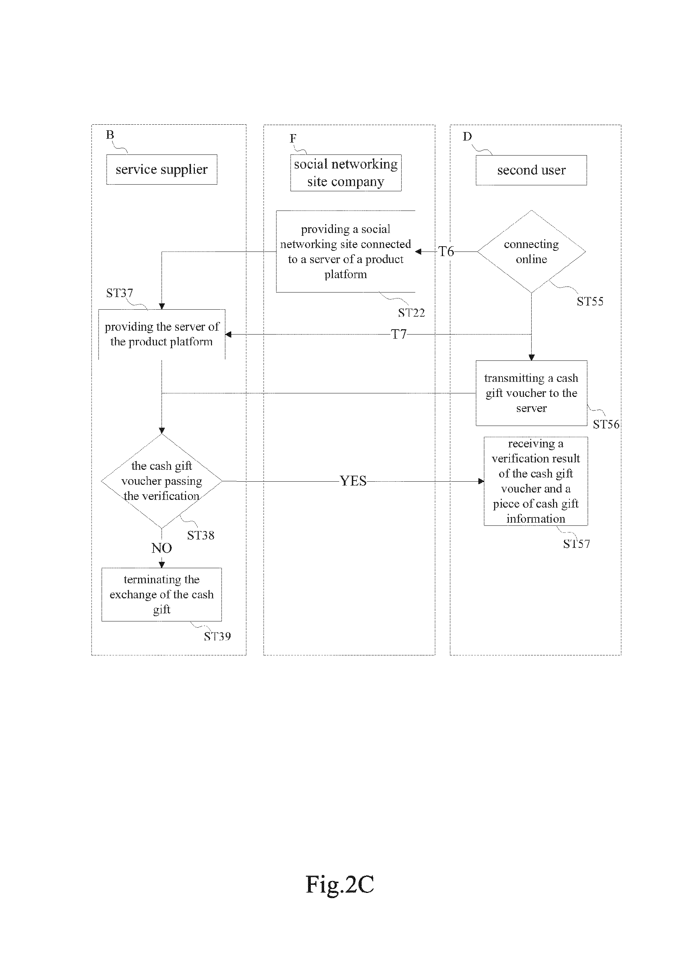

Refer to Fig. 2C, a flow chart showing steps of exchanging cash gifts of an embodiment according to the present invention is revealed. The cash gift exchange flow includes following steps.
- Step ST22:: providing a social networking site connected to a server of a product platform;
- Step ST37:: providing the server of the product platform;
- Step ST38:: the cash gift voucher passing the verification;
- Step ST39:: terminating the exchange of the cash gift;
- Step ST55:: connecting online;
- Step ST56:: transmitting a cash gift voucher to the server; and
- Step ST57:: receiving a verification result of the cash gift voucher and a piece of cash gift information.

The social networking site company F runs the step ST22, the service supplier B takes the steps T37 - 39 and the second user D executes the steps ST55 - 57.

In the step ST55, the second user D is connected to the social networking site T6 or the product platform T7 by the second terminal or a third terminal. If T6 is selected, take the step ST22. The social networking site company F provides a social networking site for the second user D to browse and log in. Then the second user D is connected to a server of a product platform via the social networking site and run the step ST37. If T7 is selected, directly take the step ST37. Complete connection between the second terminal/or the third terminal and the server. Next use a second user's account or an identity on the social networking site to log into the product platform. After the account or the identity logged in being confirmed, run the step ST56. The second user D transmits the first cash gift voucher obtained in the step ST34, the step ST351 and the step ST352 or the second cash gift voucher obtained in the step ST54 to the server for verification of the first cash gift voucher or of the second cash gift voucher. The server runs the step ST38. Verify the first cash gift voucher or the second cash gift voucher. If the first cash gift voucher passes the verification, take the step ST57. The second terminal or the third terminal receives a verification result of the first cash gift voucher together with a piece of first cash gift information, or a verification result of the second cash gift voucher together with a piece of second cash gift information transmitted by the server. At this moment, the verification result of the first cash gift voucher/or the verification result of the second cash gift voucher shows that the first cash gift voucher/or the second cash gift voucher is still valid and the first/second cash gift information includes the amount of the cash gift and expiration date of the first/second cash gift. Thus the second user D gets a cash gift that can be used on the product platform and the server saves related information into the second user's account or the social networking account (not shown in the figure). If there is a problem in verifying the first cash gift voucher or the second cash gift voucher, refer to the step ST39, stop the redemption of the cash gift voucher for the cash gift. Now the verification result of the first cash gift voucher/or the verification result of the second cash gift voucher shows that the first cash gift voucher/or the second cash gift voucher is invalid.

In summary, the present invention provides a product purchase platform using a mobile terminal in product exchange in which a service supplier provides a server so that a first user can purchase at least one product on a product platform he intends to give to a second user as a gift. The service supplier cooperates with a third party organization that receives a purchase price of the product purchased and informs the service supplier the payment of the purchase price. Thus the service supplier transmits a product voucher to the second user so that the second user can redeem the product voucher for the product in a store cooperating with the service supplier. A second terminal owned by the second user is a mobile terminal so that the second user can carry the second terminal conveniently to the store for redemption of the product voucher. The validity of the product voucher is also verified by the second terminal connected to the server. Thus there is no need to arrange a terminal in the store. Moreover, the service supplier can also cooperate with a social networking site company so that the social networking site of the company and the product platform of the service supplier are connected with each other and sharing accounts/identities and application services with each other for promotion of the product purchase and exchange service. Furthermore, the server can also provide a first cash gift voucher or a second cash gift voucher to the second user. The second user redeems the first cash gift voucher or the second cash gift voucher for a cash gift able to be used on the product platform. Thereby the service supplier uses the cash gift for attracting the second user to use the product platform. By the product purchase platform in which a product is exchanged via a mobile terminal according to the present invention, the product one user purchased can be obtained by the other user at a store nearby. Thus the other user can get the product with a better condition. In addition, the delivery and storage cost of the product is included in the purchasing and warehousing cost of the store. This is cost-saving and more economical.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A product purchase platform using a mobile terminal in product exchange comprising:
a first terminal that is used by a first user to be
connected to a product platform in a server which is provided by a service supplier for transmitting a piece of purchase information and a piece of a second user's information to the server; and
a second terminal that is a mobile terminal
operated by a second user and connected to the server for receiving a product voucher transmitted by the server and confirming validity of the product voucher; a store gives at least one product to the second user according to the purchase information after confirming that the product voucher is valid.

2. The platform as claimed in claim 1, wherein the purchase information includes at least one product name and at least one product quantity.

3. The platform as claimed in claim 1, wherein the second user's information includes an electronic mail account or a mobile phone number while the second terminal is used for receiving an electronic mail including the product voucher or a mobile phone short message having the product voucher.

4. The platform as claimed in claim 1, wherein the product voucher includes at least one one-dimensional (1D)barcode, at least one 2D barcode or at least one serial number.

5. The platform as claimed in claim 1, wherein the second terminal transmits the product voucher to the server and receives a verification result of the product voucher and the purchase information the server returns.

6. The platform as claimed in claim 1, wherein the product voucher is analyzed by the store to get the purchase information while the second terminal transmits the product voucher to the server and receives a verification result of the product voucher the server returns.

7. The platform as claimed in claim 5 or 6, wherein the server generates a piece of already-redeemed information after returning the verification result of the product voucher.

8. The platform as claimed in claim 1, wherein the product voucher is analyzed by the store to get a voucher code and the purchase information while the second terminal transmits the voucher code to the server and receives a verification result of the product voucher the server returns

9. The platform as claimed in claim 5 or 6 or 8, wherein the verification result of the product voucher is contained in at least one one-dimensional (1D)barcode, at least one 2D barcode or at least one serial number.

10. The platform as claimed in claim 8, wherein the purchase information is included in at least one one-dimensional (1D)barcode, at least one 2D barcode or at least one serial number.

11. The platform as claimed in claim 8, wherein the server generates a piece of already-redeemed information after returning the verification result of the product voucher and the purchase information.

12. The platform as claimed in claim 1, wherein the server transmits a first cash gift voucher to the second terminal, wherein the first cash gift voucher in particular includes at least one one-dimensional (1D)barcode, at least one 2D barcode or at least one serial number.

13. The platform as claimed in claim 12, wherein the second user uses the second terminal or a third terminal to connect to the server for transmitting the first cash gift voucher to the server and receiving a verification result of the first cash gift voucher and a piece of first cash gift information the server returns.

14. The platform as claimed in claim 13, wherein the first cash gift information includes the amount of the first cash gift and/or expiration date of the first cash gift.

15. The platform as claimed in claim 1, wherein the store gives a second cash gift voucher to the second user, in particular wherein the second cash gift voucher includes at least one one-dimensional (1D)barcode, at least one 2D barcode or at least one serial number.

16. The platform as claimed in claim 15, wherein
the second user uses the second terminal or a third terminal to connect to the server for transmitting the second cash gift voucher to the server and receiving a verification result of the second cash gift voucher and a piece of second cash gift information the server returns.

17. The platform as claimed in claim 16, wherein the second cash gift information includes the amount of the second cash gift and/or expiration date of the second cash gift.

18. The platform as claimed in claim 1, wherein the product purchase platform using a mobile terminal in product exchange further includes a fourth terminal that is operated by a third party organization and is connected to the server for receiving a piece of purchase price information, in particular wherein the fourth terminal transmits a piece of already-paid information to the server after the third party organization confirming a payment of a purchase price.
